# EUROPÄISCHE PATENTANMELDUNG

(11) **EP 0 690 594 A1**
(43) Veröffentlichungstag der Anmeldung: **03.01.1996**
(21) Anmeldenummer: 95109559.5
(22) Anmeldetag: 20.06.1995
(51) Int. Cl.: H04L 7/027

(54) **Schaltungsanordnung zur Taktsynchronisation**

(30) Priorität: 29.06.1994 DE 4422803
(71) Anmelder: SIEMENS AKTIENGESELLSCHAFT, D-80333 München (DE)
(72) Erfinder: Unterricker, Reinhold, Dr. Dipl.-Ing., D-81369 München (DE)

(57) **Zusammenfassung**

Schaltungsanordnung zur Taktsynchronisation, wobei aus einem Datenstrom ein Takt mit Hilfe eines Injektions-Ringoszillators ermittelt und synchronisiert wird.

## Beschreibung

Die Erfindung betrifft eine Schaltungsanordnung zur Taktsynchronisation mit einer die Zustandswechsel einer digitalen Datensignalfolge anzeigenden ersten Schaltungseinheit und mit einem Ringoszillator, der am Eingang mit dem Pegel der Ausgangssignalfolge der ersten Schaltungseinheit beaufschlagbar ist. In elektronischen Schaltungen ist es oft erforderlich, aus Datenströmen ein Taktsignal herzuleiten und dieses zu synchronisieren. Bisher wurden Phasenregelschaltkreise zur Taktsynchronisation verwendet. Phasenregelschaltkreise erfordern jedoch einen großen schaltungstechnischen Aufwand sowie eine exakte Abstimmung der verwendeten aktiven sowie passiven Bauelemente. Einen deutlich geringeren Aufwand erfordern injektionsgekoppelte Oszillatoren. Eine Schaltungsanordnung zur synchronisierten Taktrückgewinnung mit einem injektionsgekoppelten Oszillator in Form einer Multivibratorschaltung ist beispielsweise in "Electronics Letters Vol. 19, No. 21 (1983), auf den Seiten 897 bis 898 offenbart. Bei dieser Schaltungsanordnung wird ein erster Eingang direkt sowie ein zweiter Eingang eines Exklusiv-ODER-Gliedes über eine Signalverzögerungseinrichtung und einer Datensignalfolge beaufschlagt. Der Ausgang des Exklusiv-ODER-Gliedes ist mit dem Eingang des aus einem ODER-Glied sowie einem diesem nachfolgenden monostabilen Multivibrator und einer im Rückkoppelkreis des Oszillators angeordneten weiteren Signalverzögerungseinrichtung gebildet. Den Nachteil, den diese Schaltungsanordnung aufweist, ist daß sowohl die eingangsseitige sowie die im Rückkoppelzweig angeordnete Signalverzögerungseinheit exakt abgeglichen werden müssen. Werden diese Signalverzögerungeinrichtungen ungenau abgeglichen oder verändern sich deren Werte aufgrund technologiebedingter Prozesse, so verändert sich das Schaltverhalten der Signalverzögerungseinrichtung, und der Oszillator erzeugt einen systematischen Fehler. Ein exakter Ausgleich der Laufzeiten ist wiederum sehr kritisch, da ein Unterschreiten des richtigen Verzögerungswertes im Rückkoppelzweig eine Synchronisierung des Taktes unmöglich macht.

Der Erfindung liegt die Aufgabe zugrunde, eine Schaltungsanordnung anzugeben, bei der die genannten Nachteile vermieden werden.

Diese erfindungsgemäße Aufgabe wird durch die kennzeichnenden Merkmale des Anspruchs 1 gelöst.

Die Erfindung bringt den Vorteil mit sich, daß der das Taktsignal erzeugende Oszillator auch dann noch synchronisiert werden kann, wenn die Laufzeit der Verzögerungsglieder vom richtigen Wert jeweils um die halbe Taktbreite nach oben sowie nach unten abweicht.

Eine vorteilhafte Weiterbildung der Erfindung ist es, daß das digitale Ausgangssignal des bistabilen Kippgliedes durch eine Filterschaltung in ein analoges Signal umgewandelt und zur Steuerung der Signalverzögerungsglieder herangezogen wird. Dies bringt den Vorteil mit sich, daß die Laufzeit in den Signalverzögerungsgliedern geregelt und ein Phasenjitter vermieden wird.

Vorteilhafte Weiterbildungen der Erfindung sind Gegenstand weiterer Unteransprüche.

Die Erfindung wird nachfolgend anhand von Figurenbeschreibungen sowie der zugehörigen Zeitdiagrammen eingehender erläutert.

Es zeigen:
- Fig. 1: eine Schaltungsanordnung und
- Fig. 2: einen Impulsfahrplan.

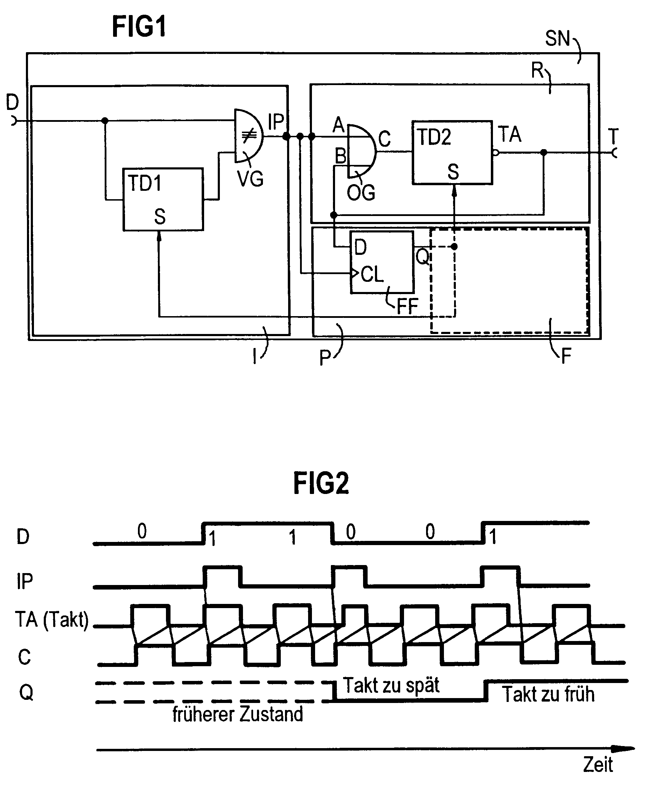

Figur 1 zeigt schematisch in einem zum Verständnis der Erfindung erforderlichen Umfang eine Schaltungsanordnung SN zur Taktsynchronisation. Die Schaltungseinheit SN besteht im wesentlichen aus einer die Zustandswechsel einer digitalen Datensignalfolge D anzeigenden ersten Schaltungseinheit I, die aus einer Signalverzögerungseinrichtung TD1 sowie einem Exklusiv-ODER-Glied VG gebildet ist, einem Injektions-Ringoszillator R, der aus einem ODER-Glied OG mit nachgeschalteter Signalverzögerungseinheit (TD2) besteht sowie einer Schaltungseinheit P, gebildet aus einem D-Flip-Flop und einer nachgeschalteten Filterschaltung. Die Signalverzögerung in den Signalverzögerungseinrichtungen TD1, TD2 beträgt vorzugsweise die halbe Zeitdauer einer Taktperiode. Am Ausgang der ersten Schaltungseinheit I liegt jeweils ein positiver Impuls der halben Bitdauer an, wenn sich ein Wechsel im Pegel der digitalen Datensignalfolge des Datenstroms D ereignet hat (siehe Fig. 2, Zeile D (Datenstrom), IP (Ausgangssignalpegel der ersten Schaltungseinheit)).

Der Ringoszillator R ist in der Schaltungsanordnung SN aus einem ODER-Glied OG mit einer nachgeschalteten Signalverzögerungseinrichtung TD2 ausgebildet. Der Ausgang der Signalverzögerungseinheit TD2 ist über einen Rückkopplungszweig mit einem Eingang des ODER-Gliedes OG verbunden. Ein weiterer Eingang des ODER-Gliedes OG ist mit dem Signalausgang der ersten Schaltungseinheit I verbunden. Solange kein Pegelwechsel im Datenstrom erfolgt, schwingt der Ringoszillator R frei (siehe Figur 2, Zeile TA, C).
- Erfolgt ein Pegelwechsel gleichzeitig mit einer positiven Flanke eines Ausgangssignals TA, so wird das Schwingverhalten des Ringoszillators R nicht beeinflußt (Figur 2, Zeile IP, erster Impuls).
- Erfolgt ein Pegelwechsel im Datenstrom vor einer positiven Flanke des Ausgangssignals des Ringsoszillator R, wird der Ausgangssignalpegel nach dem ODER-Glied OG entsprechend früher angehoben und die Schwingung des Ringoszillators R setzt um einen entsprechenden Versatz früher ein (Figur 2, Zeile IP, zweiter Impuls).
- Erfolgt ein Pegelwechsel im Datenstrom D nach der positiven Flanke des Ausgangssignals TA des Ringoszillators R, so liegt der Eingang A des ODER-Gliedes OG länger auf logisch 1 als der Eingang B des ODER-Gliedes OG, die fallende Flanke des Ausgangssignalpegels C des ODER-Gliedes OG erfolgt daher erst mit fallender Flanke von IP, d.h. daß die Schwingung des Ringoszillators R um den richtigen Versatz verzögert wird (Figur 2, Zeile IP, dritter Impuls).

Eine Synchronisierung erfolgt auch dann, wenn die Laufzeit der Signalverzögerungseinrichtungen TD1, TD2 von der halben Bitdauer abweicht. Abhängig von der Dichte der Datenwechselimpulse entsteht dann ein mehr oder weniger großer Phasenjitter. Durch eine weitere Schaltungseinheit P, bestehend aus einem D-Flip-Flop und einer Filterschaltung F, kann eine Steuerspannung zur Einstellung der Verzögerungszeiten in den Signalverzögerungseinheiten TD1, TD2 erzeugt werden.

Das bistabile Kippglied FF wird dabei an seinem Signaleingang D mit dem Ausgangssignal TA des Ringoszillators sowie an seinem Takteingang CL mit dem Ausgangssignal IP der ersten Schaltungseinheit I beaufschlagt. Der Ausgang des D-Flip-Flop ist entweder direkt oder über eine Filterschaltung F mit den Steuereingängen S der Signalverzögerungseinrichtungen TD1, TD2 verbunden.

Ein Indikator für die Laufzeitfehler ist der Pegelzustand des Ausgangssignals TA des Ringoszillators zum Zeitpunkt des Pegelwechsels bei den Datensignalen des Datenstroms D. Tastet man das Ausgangssignal TA mit den positiven Flankenimpulsen IP des Ausgangssignals der ersten Schaltungseinheit I ab, so liefert der Ausgang der bistabilen Kippstufe FF eine logische Null, wenn das Ausgangssignal TA verzögert am D-Eingang anliegt. Eine logische Eins liegt dann am Ausgang des bistabilen Kippgliedes an, wenn das Ausgangsignal TA zu früh am D-Eingang anliegt. Liegt das Ausgangssignal TA richtig, so schwankt der logische Pegel des Ausgangssignals Q des D-Flip-Flops FF mit dem Mittelwert 1/2 um die beiden logischen Werte Null und Eins. Der Pegel des Ausgangssignals Q kann beispielsweise durch eine Filterschaltung F in ein analoges Signal zur Regelung der Signallaufzeit in den Signalverzögerungseinheiten umgewandelt werden.

Der Phasenjitter wird durch die Laufzeitregelung mit der angegebenen Schaltungseinheit verschwindend klein, wenn die Logikglieder und das bistabile Kippglied FF als ideal angenommen werden können.

Bei sehr hohen Bitraten ist es vorteilhaft, die Signalverzögerungszeiten der Logik-Glieder und die Set-up-Zeit der bistabilen Kippstufe in der Dimensionierung der Signalverzögerungseinrichtung TD1, TD2 zu berücksichtigen.

## Patentansprüche

1. Schaltungsanordnung zur Taktrückgewinnung aus einer Datensignalfolge
- mit einem ersten Verknüpfungsglied (VG), dem die Datensignalfolge (D) direkt und über eine erste Signalverzögerungseinheit (TD1) zuführbar ist
- mit einem Oszillator (R) mit einem zweiten Verknüpfungsglied (OG), über dessen ersten Eingang (A), der Oszillator (R) durch das Ausgangssignal (IP) des ersten Verknüpfungsgliedes (VG) ansteuerbar ist und dessen zweiter Eingang (B) Bestandteil des Rückkopplungskreises des Oszillators (R) ist, wobei dieser Rückkoppelungskreis eine zweite Signalverzögerungseinheit (TD2) enthält
- sowie mit einem Taktausgang (T), an dem das rückgewonnene Taktsignal (TA) ausgegeben wird
**dadurch gekennzeichnet**,
daß die zweite Signalverzögerungseinheit (TD2) zwischen dem Ausgang (C) des zweiten Verknüpfungsgliedes (OG) und dem Taktausgang (T) angeordnet ist
und daß der Taktausgang (TA) unmittelbar mit dem zweiten Eingang (B) des zweiten Verknüpfungsgliedes (OG) verbunden ist.

2. Schaltungsanordnung nach Anspruch 1,
**dadurch gekennzeichnet,**
daß ein bistabiles Kippglied (FF) vorgesehen ist, das an seinem Signaleingang (D) mit dem negierten Pegel des Taktsignals (TA) der zweiten Signalverzögerungseinheit (TD2) sowie an seinem Takteingang (CL) mit dem Ausgangssignal (IP) des ersten Verknüpfungsgliedes (VG) beaufschlagbar ist, daß der Ausgang (Q) des bistabilen Kippgliedes (FF) mit einem Steuereingang (S) der ersten Signalverzögerungseinheit (TD1) und der Signalverzögerungseinheit (TD2) verbunden ist.

3. Schaltungseinheit nach Anspruch 2,
**dadurch gekennzeichnet,**
daß mit dem Ausgangssignal (Q) des bistabilen Kippgliedes (FF) eine Filterschaltung (F) beaufschlagbar ist, wobei diese Filterschaltung (F) das digitale Ausgangssignal (Q) in ein analoges Signal zur Regelung der Laufzeit der Datensignalfolge in den Signalverzögerungseinheiten (TD1, TD2) umsetzt.

4. Schaltungseinheit nach Anspruch 1,
**dadurch gekennzeichnet,**
daß das erste Verknüpfungsglied (VG) ein Exklusiv-Oder-Glied ist.

5. Schaltungseinheit nach Anspruch 1,
**dadurch gekennzeichnet,**
daß das zweite Verknüpfungsglied (OG) ein ODER-Glied ist.
